Europäisches Patentamt

European Patent Office

Office européen des brevets

(19)

(11) EP 0 845 883 A1

(12) **DEMANDE DE BREVET EUROPEEN**

(43) Date de publication:
03.06.1998 Bulletin 1998/23

(51) Int Cl.$^6$: **H04B 10/24**

(21) Numéro de dépôt: 97402840.9

(22) Date de dépôt: 26.11.1997

(84) Etats contractants désignés:
AT BE CH DE DK ES FI FR GB GR IE IT LI LU MC NL PT SE
Etats d'extension désignés:
AL LT LV MK RO SI

(30) Priorité: 28.11.1996 FR 9614582

(71) Demandeur: FRANCE TELECOM
75015 Paris (FR)

(72) Inventeurs:
• Palmier, Jean-François
91600 Savigny Sur Orge (FR)
• Minot, Christophe
75015 Paris (FR)
• Bensoussan, Marcel
92100 Boulogne (FR)

(74) Mandataire: Texier, Christian et al
Cabinet Regimbeau,
26, Avenue Kléber
75116 Paris (FR)

(54) **Dispositif de transposition bidirectionnelle entre des signaux électriques et des signaux optiques pour système de communication**

(57) La présente invention concerne un dispositif de transposition bidirectionnelle entre des signaux optiques et des signaux électriques, comprenant un récepteur pour une voie descendante assurant une conversion optique/électrique et un émetteur pour une voie remontante assurant une conversion électrique/optique, caractérisé par le fait qu'il est constitué d'un composant intégré verticalement comprenant un photo-oscillateur (10) optique-millimétrique à résistance différentielle négative, en tant que récepteur, une structure à émission verticale de lumière (30) à une longueur d'onde différente, en tant qu'émetteur, et un miroir multicouches (20) intercalé entre le photo-oscillateur (10) et la structure (30) à émission de lumière, pour découpler ceux-ci.

FIG.2

## Description

La présente invention concerne le domaine des systèmes de communication mettant en oeuvre des signaux optiques et des signaux électriques.

Plus précisément la présente invention concerne un dispositif bidirectionnel de transposition entre des signaux optiques et des signaux électriques.

Plusieurs domaines d'applications font ressortir le besoin en composants permettant de convertir des signaux optiques (en général véhiculés par des fibres optiques) en ondes électromagnétiques pour la propagation en espace libre. C'est en particulier le cas en télécommunications, où, pour relier les abonnés à des services bien définis, il est préférable, pour diverses raisons liées au système ou au service à fournir, d'employer les ondes hertziennes (radio) pour le dernier bond depuis une borne connectée au réseau de distribution par fibre optique. Cette technique profitera à la généralisation du terminal d'abonné portable en s'insérant de façon souple et économique dans les infrastructures de radiocommunications existantes.

Le domaine des télécommunications connaît une évolution de la demande vers le haut débit, que ce soit pour le RDFO (réseau de distribution par fibre optique) ou pour les réseaux hertziens pour mobiles. Tout plaide, pour des raisons essentiellement techniques de bande passante, pour la convergence de ces deux réseaux et leur évolution vers un prolongement en espace libre (réseau d'accès large bande par radio à très haute fréquence, typiquement quelques dizaines de GHz) des réseaux fixes à hauts débits sur fibre optique (voir par exemple les références [1, 2, 3, 4, 5, 6, 7]).

Dans les réseaux d'accès large bande par radio, en bout de fibre optique, ainsi proposés, un poste central est relié par fibre optique à un certain nombre de stations équipées chacune d'une antenne. Pour la voie descendante, allant du poste central vers ces diverses stations, le signal radio est imprimé sur la porteuse optique dans le poste central. A la station d'extrémité le signal radio extrait de la porteuse optique alimente l'antenne qui communique par radio en espace libre avec les "abonnés". Pour la voie remontante, allant des dites stations vers le poste central, les signaux radio captés par l'antenne de la station modulent une porteuse optique générée par une source optique. Cette onde optique est ensuite transmise au poste central sur une fibre différente de celle de la voie descendante ou de façon plus économique sur la même fibre. Pour des raisons de performance et de coût global du système, les fonctions de modulation/démodulaion, de routage, de commutation, de contrôle, et même de génération de la porteuse radio comme sous porteuse de la porteuse optique, sont regroupées au poste central plutôt que distribuées dans les nombreuses stations.

Le boîtier au niveau de chaque station terminale comprend deux organes essentiels, un récepteur pour la voie descendante et un émetteur pour la voie remontante, qui sont interfacés du côté de la fibre par des circuits optiques (guides, coupleur,...) et du côté de l'antenne par des circuits hyperfréquences (amplificateur, mélangeur,...). Plusieurs types de composants sont actuellement proposés pour assurer ces deux fonctions.

Selon l'état de la technique, le récepteur pour la voie descendante assurant une conversion optique-millimétrique est constitué soit d'une photodiode ultra rapide [8] soit d'un phototransistor qui permet d'avoir en plus un peu de gain [9]. Malgré cela les puissances du signal radio ainsi extraites de la porteuse optique restent faibles et il faut un amplificateur hyperfréquence coûteux pour avoir un niveau de puissance suffisant pour attaquer l'antenne. Récemment une solution alternative a été proposée ; elle consiste à utiliser une diode millimétrique à superréseau photosensible directement comme un oscillateur à verrouillage optique [10, 11]. On obtient de cette manière des puissances hyperfréquences confortables, ce qui relâche les exigences de performances sur l'amplificateur.

Au niveau de l'émetteur pour la voie remontante, assurant une conversion électrique-optique, la configuration actuellement expérimentée utilise un laser à semiconducteur directement modulé par le signal de l'antenne [3, 11]. Il s'agit de composants laser bien connus réalisés en optique guidée qui posent des problèmes délicats de montage et donc de coût. Une nouvelle classe de laser commence à être étudiée [12, 13, 14, 15]. Il s'agit de lasers à cavité verticale plus faciles, en principe, à coupler à une fibre.

L'inconvénient majeur du système précité est sa complexité liée au nombre de composants sophistiqués qu'il requiert, avec des conséquences évidentes sur son coût économique total. Un point à souligner plus particulièrement est la séparation totale des fonctions sur les deux voies : chaque fonction est remplie par un composant qu'il faut implanter tant électriquement qu'optiquement sur le flux d'information. Or les coûts d'assemblage et d'interconnexion (optique surtout) interviennent pour une part importante dans celui du système, d'autant plus que les composants mis en oeuvre habituellement fonctionnent en propagation guidée.

La conversion optique-radio nécessite des composants spécifiques permettant de convertir un signal optique en signal électrique depuis la borne vers l'abonné. Dans l'autre sens, on peut utiliser soit un miroir modulable au niveau du terminal de l'abonné, soit une source de lumière permettant de régénérer un signal optique. Dans le second cas la voie optique de retour peut être à une longueur d'onde différente de celle de la voie descendante.

Pour les liaisons optique-radio jusqu'à des fréquences radio de 10 GHz environ, les circuits intégrés classiques associés de façon hybride avec des composants optiques accessibles offriront à terme une technologie sûre et homogène. Aux fréquences plus élevées, et en particulier pour de la radio en ondes millimétriques, les problèmes d'intégration de tous ces composants seront beaucoup plus critiques, en raison des phénomènes de propagation des ondes dans les micro-circuits. Par ailleurs, il est plus complexe d'envisager dans le cas de composants distincts pour l'émission et la réception, d'utiliser la même fibre optique pour la voie descendante et la voie remontante.

Pour les ondes millimétriques, à côté des filières de circuits intégrés de type HEMT en association avec des photodiodes, il existe une filière de composants qui optimise le rapport performances/coût en termes de conception, de technologie et de montage en boîtier. Cette filière est celle des oscillateurs à résistance différentielle négative (RDN) pilotables électriquement ou optiquement. Pour des applications aux télécommunications on peut utiliser les super-réseaux GaInAs/AlInAs comme source de résistance négative [16]. Les performances de ces composants en terme de conversion optique-radio ont été démontrées [10]. Ils présentent une grande flexibilité en longueur d'onde : on peut les concevoir aussi bien pour être sensibles autour de 1,3 µm qu'autour de 1,5 µm.

Ces composants réalisent la conversion vers la radio, mais nécessitent d'être associés à d'autres composants pour la liaison bidirectionnelle complète.

La présente invention a maintenant pour but de perfectionner les dispositifs de transposition électrique/optique connus.

Un but important de la présente invention est notamment de proposer un duplexeur optique-millimétrique fiable et économique.

Ces buts sont atteints dans le cadre de la présente invention grâce à un dispositif de transposition bidirectionnelle entre des signaux optiques et des signaux électriques, comprenant un récepteur pour la voie descendante assurant une conversion optique-électrique et un émetteur pour la voie remontante assurant une conversion électrique-optique, caractérisé par le fait qu'il est constitué d'un composant intégré verticalement comprenant un photo-oscillateur optique-millimétrique à résistance différentielle négative, en tant que récepteur, une structure à émission verticale de lumière à une longueur d'onde plus courte, en tant qu'émetteur, et un miroir multi-couches intercalé entre le photooscillateur et la structure à émission de lumière, pour découpler ceux-ci.

Cette structure conforme à la présente invention permet l'utilisation d'une seule fibre optique pour les deux directions de propagation du signal et éventuellement la même antenne électrique pour l'émission et la réception d'ondes radio.

Ce dispositif fonctionne alternativement ou simultanément comme oscillateur piloté optiquement ou comme source optique. L'un des avantages de cette structure est de réduire le nombre de composants nécessaires à la fonction qui rend la liaison optique-radio bidirectionnelle et de permettre d'abaisser le coût du montage de la fibre optique.

D'autres caractéristiques, buts et avantages de la présente invention apparaîtront à la lecture de la description détaillée qui va suivre, et en regard des dessins annexés, donnés à titre d'exemple non limitatif et sur lesquels :

- la figure 1 représente une vue schématique en coupe verticale d'un dispositif conforme à la présente invention,
- la figure 2 représente une vue plus détaillée, en coupe verticale du même dispositif,

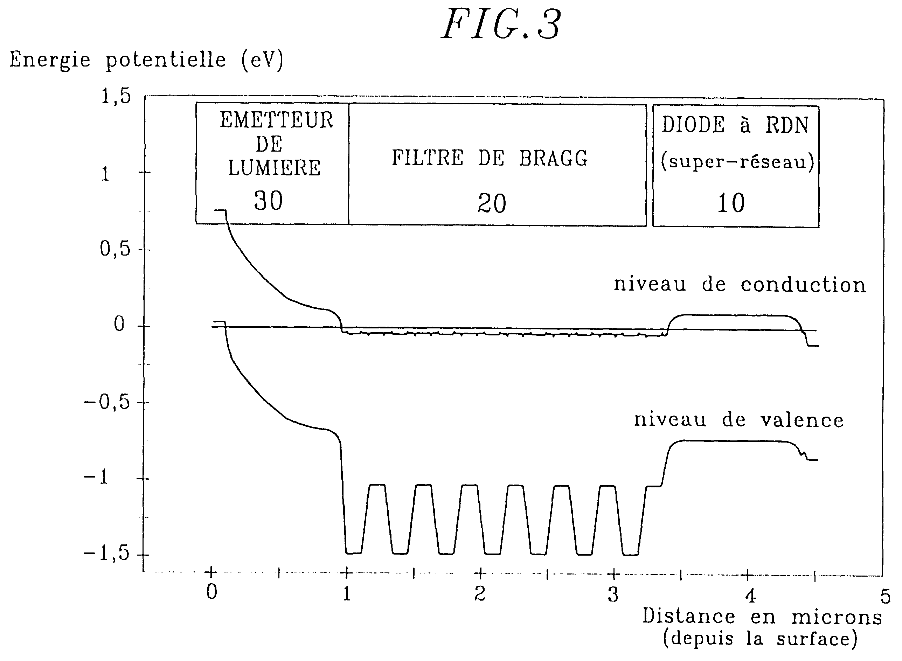

- la figure 3 représente un diagramme des bandes à l'équilibre, avec un niveau de référence correspondant au niveau de Fermi à l'équilibre,

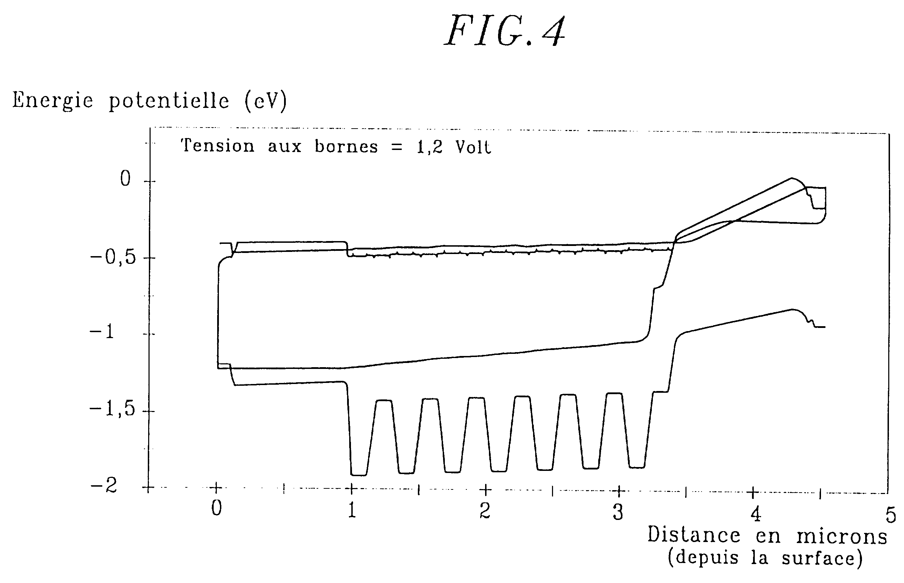

- la figure 4 représente le même diagramme que la figure 3, mais sous une tension totale appliquée de 1,2 Volts, dont environ 1 volt aux bornes de la structure émettrice de lumière,

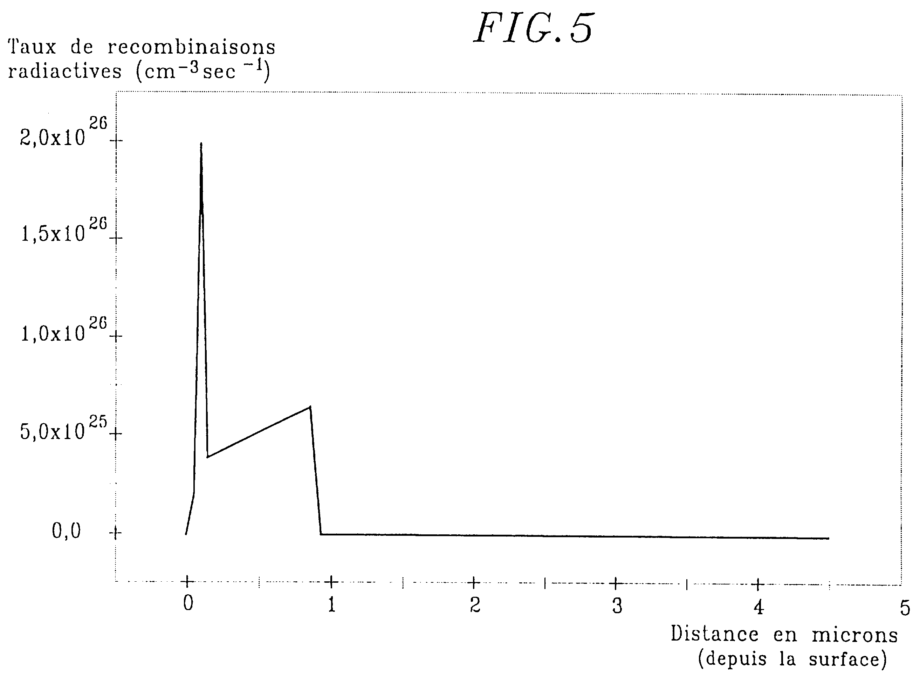

- la figure 5 représente les variations du taux d'émission radiative de la structure pour 1,2 Volt appliqué aux bornes le long de la structure (ce taux de recombinaison est lui-même relié au flux de photons émis par son intégrale sur la distance. La densité de courant équivalente s'obtient en multipliant ce taux intégré par la charge de l'électron.), et
- la figure 6 représente un montage d'un composant conforme à la présente invention en synchronisation indirecte.

Comme indiqué précédemment, le dispositif conforme à la présente invention intègre dans une même réalisation technologique un oscillateur pilotable optiquement ou électriquement et une structure à émission verticale de lumière, formée d'un laser ou d'une diode électroluminescente. Le dispositif conforme à la présente invention répond en outre de préférence aux caractéristiques suivantes :

- intégration verticale
- utilisation d'une diode oscillatrice et d'un laser ou d'une diode électroluminescente à cavité Fabry-Pérot
- utilisation de couches semiconductrices pour réaliser l'un au moins des miroirs de la cavité Fabry-Pérot (miroir de Bragg)
- définition d'une couche de contact commune aux deux composants et transparente à la longueur d'onde la plus longue, sans introduire de couplage électrique ou optique entre les deux voies
- mise en oeuvre d'une technologie permettant de réaliser des composants microniques par des méthodes standards de lithographie optique
- mise en oeuvre d'une seule fibre et d'une technique de fibrage par le dessus du composant, ne requérant pas de moyens de positionnement ultra-précis

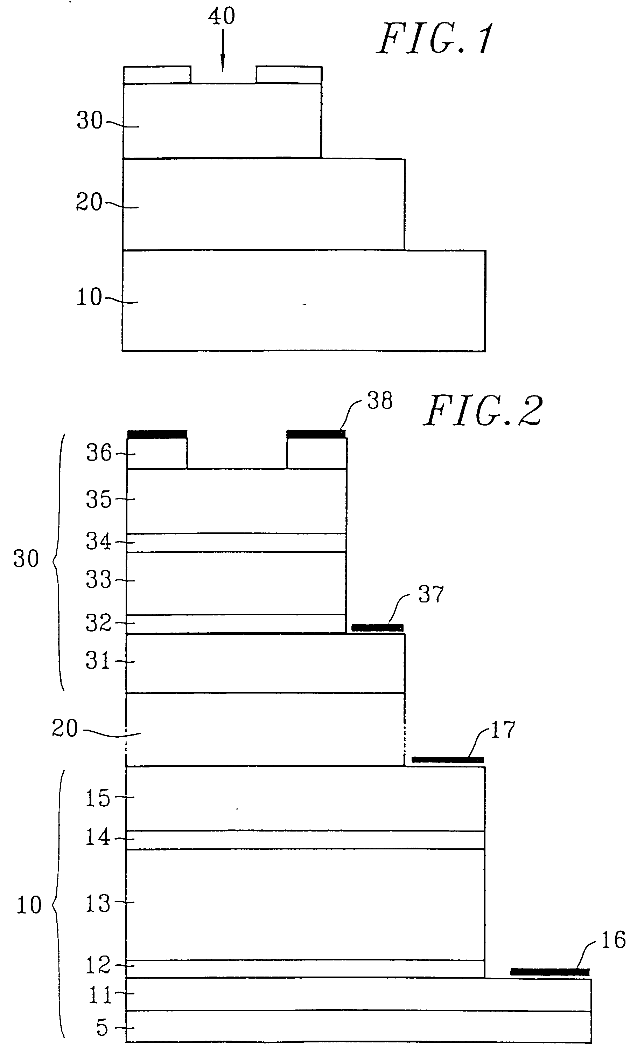

On a représenté sur la figure 1 un schéma simplifié de la structure conforme à la présente invention en trois sections :

- une structure 10 de photo-oscillateur à résistance différentielle négative sensible à une longueur d'onde $\lambda_1$,
- une structure 20 d'isolation optique constituée d'un filtre Pérot-Fabry multi-couche, et
- une structure 30 formant source verticale de lumière à une longueur d'onde $\lambda_2$.

La relation $\lambda_2 < \lambda_1$ est nécessaire pour un éclairement unilatéral de la structure par le dessus.

Sur la figure 1 la fibre optique assurant le transfert des signaux optiques du poste central vers la surface supérieure du dispositif, et de celui-ci vers le poste central, est schématisée sous la référence 40.

La structure de photo-oscillateur 10 remplit deux fonctions simultanées, une résistance différentielle négative telle qu'elle apparaît dans les matériaux III-V à bande directe et les super-réseaux à base de matériaux III-V, et une absorption à la longueur d'onde $\lambda_1$ reçue en provenance du poste central via la fibre optique 40.

Cette structure de photo-oscillateur est formée avantageusement d'une diode à résistance différentielle négative.

L'épaisseur totale L du super-réseau est telle que le temps de transit des porteurs est de l'ordre de l'inverse de la fréquence fondamentale d'oscillation f aux bornes de la résistance différentielle négative :

$$f = \frac{v}{L} \quad (1)$$

où v est la vitesse des porteurs pour le champ appliqué qui est de l'ordre de V/L, V étant la tension appliquée aux bornes de l'oscillateur. Pour que le dispositif fonctionne il est indispensable d'ajuster le dopage de la couche active et de l'encadrer de deux couches de contact. L'une de ces couches doit être transparente à la longueur d'onde $\lambda_1$ (couche du dessus). Cette condition est réalisée par l'utilisation d'une couche dopée de type n d'un alliage de plus grande bande interdite que celle du matériau à résistance différentielle négative.

Sur la figure 2 on distingue ainsi un photooscillateur 10 formé sur un substrat 5, comprenant :

- une couche inférieure de contact 11 très dopée de type n,
- une couche graduelle 12,
- une couche active dopée n 13, formée par exemple d'un super-réseau, et
- une seconde couche graduelle 14
- une couche supérieure de contact 15 à plus grande bande interdite dopée n.

Une première électrode de contact 16 est déposée sur la couche de contact inférieure 11 qui possède une portion de surface libre au delà de l'empilement 12-15.

Une seconde électrode de contact 17 est déposée sur la couche de contact supérieure 15.

La structure multi-couche 20 formant filtre d'isolation optique entre les structures 10 et 30 a pour fonction de filtrer la longueur d'onde $\lambda_2$ du dispositif émetteur 30 et de laisser passer la longueur d'onde $\lambda_1$ de commande du photo-oscillateur 10. Elle a été décrite dans de nombreux articles, voir par exemple [12].

La structure 30 à émission verticale de lumière a pour fonction d'émettre de la lumière à la longueur d'onde $\lambda_2$ pour réaliser la voie de retour sur la fibre 40. Le confinement électrique des porteurs y est réalisé par deux couches 31,35 d'alliage à grande bande interdite dopées respectivement de type p sur le dessus et de type n juste au dessus du miroir multicouche 20 (voir figure 2). Une couche supérieure 36 déposée sur la couche de confinement électrique supérieure 35 permet de réaliser un bon contact ohmique. Il est indispensable de réaliser une fenêtre dans cette couche 36 pour ne pas y absorber la lumière. La couche supérieure 35 de confinement électrique réalise un confinement optique partiel.

Sur la figure 2, la couche active placée entre les deux couches de confinement 31, 35, est référencée 33. Elle peut être formée d'un alliage ou d'une structure à multipuits quantiques.

De préférence des couches graduelles 32, 34 sont intercalées entre la couche active 33 et respectivement chacune des couches de confinement 31, 35.

Un premier contact 37 est formé sur la couche de confinement inférieur 31 qui s'étend pour celà latéralement au delà de l'empilement 32-36.

Un second contact 38 est déposé sur la couche 36 autour de la fenêtre formée dans celle-ci.

Le fonctionnement du système ainsi formé est essentiellement le suivant :

Le signal optique de longueur d'onde $\lambda_1$ injecté dans la fibre optique 40 par le poste central traverse librement la structure émettrice 30 et le miroir 20. Il atteint ainsi et pilote le photo-oscillateur 10 qui délivre sur ses contacts 16,17 un signal électrique apte à assurer une émission radio via une antenne associée.

Un signal électrique issu de la réception sur l'antenne est appliqué aux électrodes 37, 38 de la structure émettrice 30 pour commander celle-ci et injecter dans la fibre 40 un signal de longueur d'onde $\lambda_2$ véhiculé en retour vers le poste central.

Selon un exemple de réalisation non limitatif, la structure conforme à la présente invention est réalisée par épitaxie des couches suivantes dans le système GaInAs/AlInAs accordé sur InP.

Cette structure comprend 35 couches sans compter les couches très fines constituant les superréseaux qui sont ici décrits comme des milieux effectifs macroscopiques dans un but de simplification.

| matériau | épaisseur (µm) | type | dopage (cm-3) | composition | puits | barrière |
|---|---|---|---|---|---|---|
| GaInAs(47%) | 0,1 | p+ | 1019 | | | |
| grad | 0,05 | p | | | | |
| SR | 0,8 | i | | 0% & 100% | 45 | 20 |
| grad | 0,05 | n | | | | |
| InAlAs | 0,1 | n | | | | |
| grad | 0,05 | n | | | | |
| InGaAlAs | 0,069 | n | | 38% | | |
| grad | 0,05 | n | | | | |
| InAlAs | 0,1 | n | | | | |
| grad | 0,05 | n | | | | |
| InGaAlAs | 0,069 | n | | 38% | | |
| grad | 0,05 | n | | | | |
| InAlAs | 0,1 | n | | | | |
| grad | 0,05 | n | | | | |
| InGaAlAs | 0,069 | n | | 38% | | |
| grad | 0,05 | n | | | | |
| InAlAs | 0,1 | n | | | | |
| grad | 0,05 | n | | | | |
| InGaAlAs | 0,69 | n | | 38% | | |
| grad | 0,05 | n | | | | |
| InAlAs | 0,1 | n | | | | |
| grad | 0,05 | n | | | | |
| InGaAlAs | 0,069 | n | | 38% | | |
| grad | 0,05 | n | | | | |
| InAlAs | 0,1 | n | | | | |
| grad | 0,05 | n | | | | |
| InGaAlAs | 0,069 | n | | 38% | | |
| grad | 0,05 | n | | | | |
| InAlAs | 0,1 | n | | | | |
| grad | 0,05 | n | | | | |
| InGaAlAs | 0,069 | n | | 38% | | |
| grad | 0,05 | n | | | | |

(suite)

| matériau | épaisseur (µm) | type | dopage (cm-3) | composition | puits | barrière |
|---|---|---|---|---|---|---|
| SR | 1,0 | n | | 0% & 50% | 60 | 25 |
| grad | 0,05 | n | | | | |
| GaInAs | 0,3 | n+ | | | | |

Bien entendu la présente invention n'est pas limitée au mode de réalisation particulier qui vient d'être décrit, mais s'étend à toutes variantes conformes à son esprit.

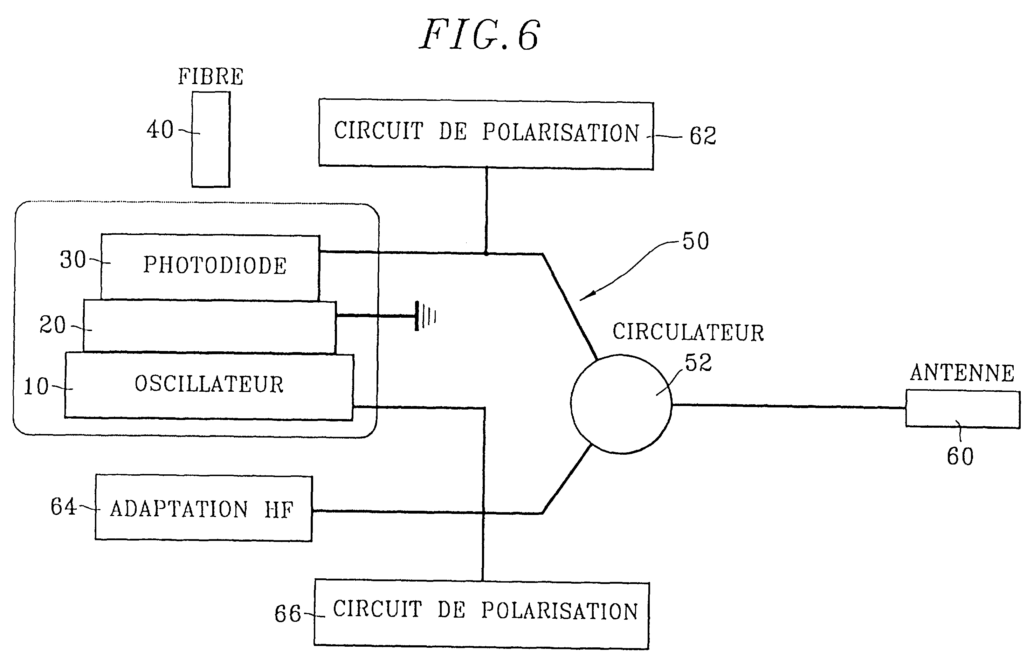

On a illustré sur la figure 6 une application conforme à la présente invention d'un composant en synchronisation indirecte. Le composant précédemment décrit permet de travailler en duplex complet, les signaux optiques aux deux longueurs d'ondes étant complètement découplés. Le dispositif illustré sur la figure 6 correspond à un mode de fonctionnement dégradé à la seule longueur d'onde λ2 (ou à deux longueurs d'ondes voisines, proches de λ2). Le mode dégradé correspond à l'utilisation du même composant avec des fonctionnalités réduites, permettant une plus grande souplesse d'utilisation selon les exigences du système. Le duplexeur de la figure 6 fonctionne en alternat dans le temps : il est soit émetteur, soit récepteur.

Une boucle de réaction externe 50 comportant un circulateur 52 permet de réinjecter le signal issu de la photodiode 30 (diode supérieure polarisée en inverse) dans le cicuit de l'oscillateur 10. Sur la figure 6 on a schématisé en 60 l'antenne, en 62 un circuit de polarisation de la photodiode 30, en 64 un circuit d'adaptation HF et en 66 un circuit de polarisation de l'oscillateur 10. Les fonctions "circuit de polarisation", "antenne" et "adaption HF" sont parfaitement connues en soi et ne seront donc pas décrites plus en détail par la suite.

En émetteur la structure supérieure 30 émet des photons et transmet la modulation issue de l'antenne 60 (éventuellement amplifiée); ce sont les abonnés qui transmettent des appels ou des données en direction du central.

En récepteur la structure supérieure 30 est polarisée en inverse et se comporte comme un photodétecteur. Le signal électrique photodétecté sert à synchroniser l'oscillateur 10 à super-réseau comme schématisé sur la figure 6.

Ce mode de réalisation de la figure 6 n'utilise plus ni la photosensibilité du super réseau oscillateur 10, ni la transparence de la diode émettrice supérieure 30 mais permet d'enrichir les possibilités et la souplesse d'utilisation du composant.

La structure proposée dans le cadre de la présente invention permet d'obtenir un composant unique, fiable et économique assurant les deux fonctions de conversion optique/électrique et électrique/ optique pour des services à haut débit et permet d'assurer une liaison bidirectionnelle entre un poste central et une pluralité de stations, par l'intermédiaire d'une seule fibre optique respective entre le poste central et chaque station.

La structure conforme à la présente invention permet également d'utiliser la même antenne pour l'émission et la réception radio.

REFERENCES

[1] Fiber Optic Millimeter-Wave Subcarrier-Transmission Links for Personal Radio Communication Systems H. OGAWA and D. POLIFKO IEEE MTT-S Digest p. 555 (1992)

[2] The Merging of Photonic and Microwave Technologies D. POLIFKO and H. OGAWA Microwave Journal p. 75 (March 1992)

[3] RACE R2005 microwave optical duplex antenna link J. J. O'REILLY, P.M. LANE, M.H. CAPSTICK, H.M SALGADO, R. HEIDEMANN, R. HOFSTETTER and H. SCHMUCK IEE PROCEEDINGS-J, Vol. 140, N°. 6, p. 385 (Decembre 1993)

[4] Proposal of fiber and radio extension link for future personal communications S. KOMAKI, K. TUKAMOTO, S. HARA, and N. MORINAGA Microwave and Optical Technologie Letters 1993, Vol. 6, N° 1, pp. 55

[5] Fiber-optic link architecture for microwave subcarrier transmission and reception G. K. GOPALAKRISHNAN, K. J. WILLIAMS, R. P. MOELLER, W. K. BURNS and R. D. ESMAN Electron. Lett. 1995, 31, (20), pp. 1764

[6] Millimeter-wave (39 GHz) fibre-wireless transmission of broadband multichannel compressed digital video J. PARK and K. Y. LAU Electron. Lett. 1996, 32, (5), pp. 474

[7] Comparison of fibre and coaxial link for access network in microcellular PCS H. JUNG and O. K. TONGUZ Electron. Lett. 1996, 32, (5), pp. 425

[8] Zero-bias edge-coupled InGaAs photodiodes in millimetre radio-fibre systems D. WAKE, N.G. WALKER and I. C. SMITH, Electronics Letters 14th, Oct. 93, vol. 29, n° 21

[9] Optically- biased, edge-coupled InP/InGaAs heterojonction phototransitors D. WAKE, D. J. NEWSON, M. J. HARLOW and I. D. HENNING Electron. Lett. 1993, 29, (25), pp. 2217

[10] Direct Optical Injection Locking of 20 GHz Superlattice Oscillators J. F. CADIOU, J. GUENA, E. PENARD, P. LEGAUD, C. MINOT, J. F. PALMIER, H. LE PERSON and J. C. HARMAND Electron. Letters 1994, 30 (20) pp 1690

[11] System Design for Radio Over Fiber in the Millimeter Wave Range J. F. CADIOU, E. PENARD, P. LEGAUD, J. GUENA, F. DEVAUX, C. MINOT, J. F. PALMIER, D. MATHOORASING and C. KAZMIERSKI. IEEE HTT-S Optical Microwave Interactions pp 185 (1994)

[12] Room-Temperature Continuous-Wave Operation of 1.54 μm Vertical-Cavity Lasers D. I. BABIE, K. STREUBEL, R. P. MIRIN, N. M. MAGALIT, J. E. BOWERS, E. L. HU, D. E. MARS, L. YANG et K. CAREY IEEE Photonics Technol. Lett. 7, 11, 1225 (1995)

[13] 10 Gbit/s data transmission using top emitting VCSELs with high side mode suppression U. FIEDLER, B. MOLLER, P. SCHNITZER et K. J. EBELING Electron. Lett. 1995, 31, (19), pp. 1664

[14] Widely and Continuously Tunable Micromachined Resonant Cavity Detector with Wavelength Traking M. S. WU, E. C. VAIL, G. S. LI, W. YUEN et C. J. CHANG-HASNAIN IEEE Photonics Technol. Lett. 8, 1, 98 (1996)

[15] Continuously tunable micromachined vertical cavity surface emitting laser with 18 nm wavelength range M. C. LARSON, A. R. MASSENGALE et J. S. HARRIS Electron. Lett. 1996, 32, (5), pp. 330

[16] Microwave miniband NDC in GaInAs/AllnAs superlattices, J. F. Palmier, J. C. Harmand, C. Minot, H. Le Person, E. Dutisseuil, H. Wang and G. Leroux, Solid state Electronics, 1994, 37 (4), pp 697.

## Revendications

1. Dispositif de transposition bidirectionnelle entre des signaux optiques et des signaux électriques, comprenant un récepteur pour une voie descendante assurant une conversion optique/électrique et un émetteur pour une voie remontante assurant une conversion électrique/optique,
caractérisé par le fait qu'il est constitué d'un composant intégré verticalement comprenant un photo-oscillateur (10) optique-millimétrique à résistance différentielle négative, en tant que récepteur, une structure à émission verticale de lumière (30), en tant qu'émetteur, et un miroir multicouches (20) intercalé entre le photo-oscillateur (10) et la structure (30) à émission de lumière, pour découpler ceux-ci.

2. Dispositif selon la revendication 1, caractérisé par le fait que la structure (30) à émission verticale de lumière est adaptée pour émettre à une longueur d'onde plus courte que la longueur d'onde de commande du photo-oscillateur.

3. Dispositif selon l'une des revendications 1 ou 2, caractérisé par le fait que la structure (30) à émission verticale de lumière est formée d'un laser.

4. Dispositif selon l'une des revendications 1 ou 2, caractérisé par le fait que la structure (30) à émission verticale de lumière est formée d'une diode électroluminescente.

5. Dispositif selon l'une des revendications 1 à 4, caractérisé par le fait que le miroir multicouches (20) est formé d'un filtre Fabry-Pérot.

6. Dispositif selon l'une des revendications 1 à 5, caractérisé par le fait que la structure émettrice de lumière (30) est disposée en partie supérieure du dispositif et placée en regard d'une fibre optique (40).

7. Dispositif selon l'une des revendications 1 à 6, caractérisé par le fait que le photo-oscillateur (10) est formé d'une diode millimétrique à superréseau photosensible.

8. Dispositif selon l'une des revendications 1 à 7, caractérisé par le fait que le photo-oscillateur (10) est formé d'une couche active (13) placée entre deux couches de contact (11, 15).

9. Dispositif selon la revendication 8, caractérisé par le fait que la couche active (13) est formée d'un superréseau.

10. Dispositif selon l'une des revendications 8 ou 9, caractérisé par le fait qu'une couche graduelle (12, 14) est intercalée entre la couche active (13) et chacune des couches de contact (11, 15).

11. Dispositif selon l'une des revendications 8 à 10, caractérisé par le fait que la couche de contact supérieure (14) est transparente à la longueur d'onde ($\lambda_1$) de commande du photo-oscillateur (10).

12. Dispositif selon l'une des revendications 8 à 11, caractérisé par le fait que la couche de contact supérieure (14) présente une plus grande bande interdite que la couche active (13).

13. Dispositif selon l'une des revendications 1 à 12, caractérisé par le fait que la structure émettrice de lumière (10) comprend une couche active (33) placée entre deux couches (31, 35) à grand intervalle de bande interdite.

14. Dispositif selon la revendication 13, caractérisé par le fait que la couche active (33) est formée d'un alliage ou d'une structure à multipuits quantiques.

15. Dispositif selon l'une des revendications 13 ou 14, caractérisé par le fait qu'il comprend des couches graduelles (32, 34) entre la couche active (33) et les couches de confinement (31, 35).

16. Dispositif selon l'une des revendications 13 à 15, caractérisé par le fait qu'il comprend une couche supérieure de contact (36) munie d'une fenêtre.

17. Dispositif selon l'une des revendications 1 à 16, caractérisé par le fait que le photo-oscillateur (10) est formé par la combinaison de la structure à émission verticale de lumière (30) polarisée en inverse pour former détecteur et d'un oscillateur (10), le signal photodétecté dans la structure (30) étant transmis à l'oscillateur (10).

18. Système de communication comprenant un réseau de distribution à fibre optique entre au moins un poste central et une pluralité de stations équipées chacune d'un émetteur radio formant un réseau d'accès par radio en bout de fibre optique, caractérisé par le fait qu'il comprend un dispositif de transposition bidirectionnelle conforme à l'une des revendications 1 à 17 dans chacune des stations.

19. Système selon la revendication 18, caractérisé par le fait qu'il comporte une seule fibre optique pour la liaison bidirectionnelle entre le poste central et chacune station respective.

20. Système selon l'une des revendications 18 ou 19, caractérisé par le fait que chaque station comporte une antenne unique assurant à la fois l'émission et la réception radio.

*FIG.1*

40

30

20

10

*FIG.2*

38

30 {
36
35
34
33
32
31
}

37

20

17

10 {
15
14
13
12
11
5
}

16

# FIG.3

Energie potentielle (eV)

niveau de conduction

niveau de valence

| EMETTEUR DE LUMIERE 30 | FILTRE DE BRAGG 20 | DIODE à RDN (super-réseau) 10 |

Distance en microns
(depuis la surface)

EP 0 845 883 A1

# FIG.4

Energie potentielle (eV)

Tension aux bornes = 1,2 Volt

Distance en microns
(depuis la surface)

## FIG.5

Taux de recombinaisons radiactives $(cm^{-3} sec^{-1})$

Distance en microns (depuis la surface)

EP 0 845 883 A1

# FIG.6

FIBRE

40 ┐

EP 0 845 883 A1

CIRCUIT DE POLARISATION ─ 62

50

30 ─ PHOTODIODE

20 ─

CIRCULATEUR
52

10 ─ OSCILLATEUR

ANTENNE

60

64 ─ ADAPTATION HF

66 ─ CIRCUIT DE POLARISATION

Office européen
des brevets

**RAPPORT DE RECHERCHE EUROPEENNE**

Numéro de la demande

EP 97 40 2840

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE 32 17 610 A (LICENTIA GMBH) 17 novembre 1983 | 1-4,6 | H04B10/24 |
| A | * page 7, ligne 15 - page 8, ligne 8; figures 1,2 * | 5,8,17 | |
| | --- | | |
| X | WO 95 33317 A (PHILIPS ELECTRONICS NV ;PHILIPS NORDEN AB (SE)) 7 décembre 1995 | 1-3,6 | |
| Y | * page 7, ligne 15 - page 8, ligne 21 * | 4,18-20 | |
| A | * page 9, ligne 20 - page 10, ligne 1 * * abrégé; figure 1 * | 8,13,17 | |
| | --- | | |
| Y | WO 96 31026 A (WHITAKER CORP) 3 octobre 1996 | 4 | |
| A | * page 7, ligne 23 - page 8, ligne 27; figures 3,4 * | 1,7,13, 14 | |
| | --- | | |
| Y | EP 0 391 597 A (AMERICAN TELEPHONE & TELEGRAPH) 10 octobre 1990 * colonne 6, ligne 3 - ligne 40; figures 1,4,5 * | 18-20 | |
| | --- | | **DOMAINES TECHNIQUES RECHERCHES (Int.Cl.6)** |
| A | PATENT ABSTRACTS OF JAPAN vol. 096, no. 001, 31 janvier 1996 & JP 07 250032 A (NIPPON TELEGR & TELEPH CORP), 26 septembre 1995, * abrégé * | 1,3,5,6, 8,10,13 | H04B |
| | ----- | | |

Le présent rapport a été établi pour toutes les revendications

| Lieu de la recherche | Date d'achèvement de la recherche | Examinateur |
|---|---|---|
| LA HAYE | 5 mars 1998 | Goudelis, M |